# EUROPÄISCHE PATENTSCHRIFT

(11) **EP 2 933 236 B1**
(45) Veröffentlichungstag und Bekanntmachung des Hinweises auf die Patenterteilung: **18.05.2016**
(21) Anmeldenummer: 14164782.6
(22) Anmeldetag: 15.04.2014
(51) Int. Cl.: F23M 5/00, F27D 1/00, C04B 35/66, C04B 35/04, C04B 35/043

(54) **Feuerfester keramischer Versatz, Verwendung eines solchen Versatzes sowie ein metallurgisches Schmelzgefäß**
Refractory ceramic formulation, use of such a formulation and a metallurgical melting vessel
Mélange céramique réfractaire, utilisation d'un tel mélange et récipient de fusion métallurgique

(43) Veröffentlichungstag der Anmeldung: 21.10.2015
(73) Patentinhaber: Refractory Intellectual Property GmbH & Co. KG, 1100 Wien (AT)
(72) Erfinder: Eckstein, Wilfried, 8793 Trofaiach (AT); Zettl, Karl-Michael, 1100 Wien (AT)
(74) Vertreter: Schweiger, Johannes

(56) Entgegenhaltungen:
- EP-A1- 2 573 058
- AT-B- 353 155
- JP-A- H09 142 917
- US-A- 5 645 772

## Beschreibung

Die Erfindung betrifft einen feuerfesten keramischen Versatz zur Herstellung eines ungeformten feuerfesten keramischen Erzeugnisses, die Verwendung eines solchen Versatzes zur Auskleidung von metallurgischen Schmelzgefäßen sowie ein metallurgisches Schmelzgefäß, das mit einem ungeformten feuerfesten keramischen Erzeugnis auf Basis eines solchen Versatzes ausgekleidet ist.

Mit einem feuerfesten keramischen Versatz wird bekanntermaßen eine Zusammensetzung aus einer oder mehreren Komponenten bezeichnet, durch die mittels eines keramischen Brandes ein feuerfestes keramisches Erzeugnis herstellbar ist. Der Begriff "feuerfestes keramisches Erzeugnis" im Sinne der Erfindung bezeichnet insbesondere keramische Erzeugnisse mit einer Einsatztemperatur von über 600° C und bevorzugt feuerfeste Werkstoffe gemäß DIN 51060, also Werkstoffe mit einem Kegelfallpunkt > SK 17. Die Ermittlung des Kegelfallpunktes kann insbesondere gemäß DIN EN 993-12 erfolgen.

Feuerfeste keramische Erzeugnisse sind insbesondere auch in Form ungeformter feuerfester keramischer Erzeugnisse bekannt, also sogenannter "feuerfester Massen".

Feuerfeste Massen werden insbesondere auch dazu verwendet, metallurgische Schmelzgefäße auszukleiden.

Massen zur Auskleidung beziehungsweise Beschichtung von metallurgischen Schmelzgefäße sind insbesondere auch in Form sogenannter Herdbau- beziehungsweise Herdreparaturmassen bekannt, die zur feuerfesten Auskleidung solcher Schmelzgefäße beziehungsweise zur Reparatur der Auskleidung solcher Schmelzgefäße dienen.

Herdbau- und Herdreparaturmassen für metallurgische Schmelzgefäße werden in der Regel aus eisen- und kalkreicher natürlicher Magnesia, beispielsweise alpiner Magnesia hergestellt. Solch eisen- und kalkreiche Magnesia wird bevorzugt zur Herstellung einer Herdbau- und Herdreparaturmasse verwendet, da diese bei der Anwendung schon bei verhältnismäßig niedrigen Temperatur Dicalciumferrit (2 CaO·Fe₂O₃; Ca₂Fe₂O₅) ausbildet. Dieses Dicalciumferrit bildet schon bei verhältnismäßig niedrigen Temperaturen eine Schmelzphase auf der dem Innenraum des metallurgischen Schmelzgefäßes zugewandten Oberfläche der Herdbau- oder Herdreparaturmasse aus. Hierdurch werden die darunterliegende Masse sowie die durch die Masse beschichteten Bereiche des metallurgischen Schmelzgefäßes vor einem Angriff durch die Metallschmelze geschützt, bis die Masse bei höheren Temperaturen eine dichte Sinterschicht ausbildet, in die die Metallschmelze dann kaum noch einzudringen vermag.

Solch eisen- und kalkreiche natürliche Magnesia steht in vielen Fällen jedoch nicht zur Verfügung. Für diese Fälle ist es bekannt, eine synthetische eisen- und kalkreiche Magnesia herzustellen. Zur Herstellung einer solch synthetischen eisen- und kalkreichen Magnesia werden beispielsweise eisenarmer Magnesit, Dolomit und ein Eisenoxidträger, beispielsweise Walzenzunder, vorgemischt, brikettiert und dann in einem Drehrohrofen bei hoher Temperatur gebrannt, wobei sich neben synthetischer Magnesia insbesondere auch Dicalciumferrit ausbildet, welches für die Funktionsweise der aus der Magnesia hergestellten Masse, wie vorstehend ausgeführt, von entscheidender Bedeutung ist.

Nachteilig an der Herstellung solch synthetischer eisen- und kalkreicher Magnesia ist jedoch beispielsweise, dass diese in einem eigenen Drehrohrofen gebrannt werden muss, da der Ofen durch die verwendeten Rohstoffe zur Herstellung der synthetischen Magnesia verunreinigt wird. Beispielsweise kann in einem solchen Ofen keine eisen- und kalkarme natürliche Magnesia gebrannt werden, da diese durch die Rohstoffe zur Herstellung der synthetischen eisen- und kalkreichen Magnesia verunreinigt werden würde.

Ferner sind beispielsweise Herdbau- und Herdreparaturmassen bekannt, die aus einem Versatz hergestellt sind, der Sintermagnesia, gebrannte Doloma und gegebenenfalls Eisenoxidträger umfasst. Gebrannte Doloma neigt allerdings stark zum Hydratisieren, so dass ein solch gebrannte Doloma umfassender Versatz nur eine eingeschränkte Lagerbeständigkeit aufweist.

Der Erfindung liegt die Aufgabe zugrunde, einen feuerfesten keramischen Versatz auf Basis eisenarmer Magnesia zur Herstellung einer feuerfesten Masse zur Verfügung zu stellen, die im Wesentlichen die gleichen Eigenschaften wie eine Masse aufweist, die auf Basis eisen- und kalkreicher natürlicher Magnesia hergestellt ist. Eine weitere Aufgabe der Erfindung besteht darin, einen Versatz auf Basis eisenarmer Magnesia zur Herstellung einer Masse zur Verfügung zu stellen, die bereits bei verhältnismäßig niedrigen Temperaturen eine Schmelzschicht ausbildet. Eine weitere Aufgabe der Erfindung besteht darin, einen Versatz auf Basis eisenarmer Magnesia zur Herstellung einer Masse zur Verfügung zu stellen, die bereits bei verhältnismäßig niedrigen Temperaturen eine Schmelze ausbildet und bei höheren Temperaturen eine dicht gesinterte Schicht ausbildet. Eine weitere Aufgabe der Erfindung besteht darin, einen solchen Versatz auf Basis eisenarmer Magnesia zur Herstellung einer Masse für die Auskleidung eines metallurgischen Schmelzgefäßes zur Verfügung zu stellen, die bei niedrigen Temperaturen eine Schmelze ausbildet und bei hohen Temperaturen eine dichte Sinterschicht ausbildet. Eine weitere Aufgabe der Erfindung besteht darin, einen solchen Versatz auf Basis eisenarmer Magnesia zur Herstellung einer Masse zur Verfügung zu stellen, der eine gute Lagerbeständigkeit aufweist.

Zur Lösung dieser Aufgaben wird erfindungsgemäß zur Verfügung gestellt ein feuerfester keramischer Versatz zur Herstellung eines ungeformten feuerfesten keramischen Erzeugnisses, der die folgenden Rohstoffe umfasst:
- einen oder mehrere eisenarme Rohstoffe auf Basis Magnesia mit einem Anteil im Bereich von 66 bis 94 Masse-%;
- einen oder mehrere Rohstoffe auf Basis Calciumcarbonat mit einem Anteil im Bereich von 5 bis 30 Masse-%; und
- Eisenpulver mit einem Anteil im Bereich von 1 bis 6 Masse-%.

Überraschend hat sich erfindungsgemäß herausgestellt, dass durch einen feuerfesten keramischen Versatz, der die vorstehenden Rohstoffe umfasst, ein ungeformtes feuerfestes keramisches Erzeugnis, also eine Masse, herstellbar ist, die im Wesentlichen die gleichen Eigenschaften aufweist wie eine Masse, die auf Basis eisen- und kalkreicher natürlicher Magnesia hergestellt ist.

Erfindungsgemäß hat sich überraschend herausgestellt, dass die Verwendung von Eisenpulver in Kombination mit Rohstoffen auf Basis Calciumcarbonat in dem erfindungsgemäßen Versatz dazu führt, dass sich bereits bei Temperaturen ab etwa 1.000 bis 1.200° C Dicalciumferrit bildet, das auf der Oberfläche der Masse eine Schmelzschicht ausbildet. Hierdurch ist die Masse vor der Ofenatmosphäre beziehungsweise etwaig bei solch niedrigen Temperaturen bereits im Ofen befindlicher Metallschmelze geschützt, bevor die Masse erst bei höheren Temperaturen einen dicht gesinterten monolithischen Körper ausgebildet hat. Erfindungsgemäß hat sich herausgestellt, dass Eisenpulver dabei wesentlich besser mit den Rohstoffen auf Basis Calciumcarbonat zu Dicalciumferrit reagiert als Rohstoffe auf Basis Eisenoxid, so dass die Bildung von Dicalciumferrit zum Schutz der Masse sichergestellt ist.

Erfindungsgemäß wurde festgestellt, dass das Eisenpulver des erfindungsgemäßen Versatzes ab etwa 600° C zu Eisen(II)-oxid (FeO) reagiert. Ab etwa 1.000° C bildet sich, insbesondere in oxidierender Atmosphäre, aus dem Eisen(II)-oxid beziehungsweise dem Eisenpulver Eisen(III)-oxid (Fe₂O₃). Ferner calciniert das Calciumcarbonat der Rohstoffe auf Basis Calciumcarbonat spätestens bei diesen Temperaturen, so dass das Calciumcarbonat in den Rohstoffen auf Basis Calciumcarbonat Calciumoxid (CaO) bildet. Das Eisen(II)-oxid reagiert mit der Magnesia der Rohstoffe auf Basis Magnesia zu Magnesiaferrit, während insbesondere das Eisen(III)-oxid ab etwa 1.000° C mit Calciumoxid zu Dicalciumferrit reagiert. Dabei bildet sich bei stärker reduzierender Atmosphäre vermehrt Magnesiaferrit, während sich bei stärker oxidierender Atmosphäre vermehrt Dicalciumferrit bildet. Ab einer Temperatur von etwa 1.200° C bildet das Dicalciumferrit eine Schmelzphase auf der Oberfläche der Masse, die die darunterliegende, noch nicht dicht gesinterte Masse, vor einem Angriff der Ofenatmosphäre beziehungsweise etwaig im metallurgischen Schmelzgefäß bereits vorhandener Metallschmelze schützt. Bei höheren Temperaturen, insbesondere ab Temperaturen von etwa 1.400 bis 1.600° C, also den regelmäßigen Anwendungstemperaturen von Massen in metallurgischen Schmelzgefäßen, bildet die Masse einen dicht gesinterten feuerfesten keramischen monolithischen Körper, der insbesondere die Phasen Periklas (MgO), Wüstit ((Mg,Fe)O) und CaO umfasst.

Vorteilhaft an dem erfindungsgemäßen Versatz ist ferner, dass dieser ausschließlich stabile Phasen aufweist, so dass der Versatz eine sehr gute Lagerbeständigkeit aufweist.

Erfindungsgemäß kann insbesondere vorgesehen sein, dass der Anteil an Eisen der eisenarmen Rohstoffe auf Basis Magnesia, berechnet als Fe₂O₃ und bezogen auf die Gesamtmasse der eisenarme Rohstoffe, unter 1,5 Masse-% liegt, also beispielsweise auch unter 1,4 Masse-%, 1,3 Masse-%, 1,2 Masse-%, 1,1 Masse-%, 1,0 Masse-% oder 0,9 Masse-%. Diese Angaben beziehen sich auf die Gesamtmasse der eisenarmen Rohstoffe, so dass im Falle einer Verwendung unterschiedlicher eisenarmer Rohstoffe auf Basis Magnesia einzelne dieser Rohstoffe gegebenenfalls auch einen Anteil an Eisen aufweisen können, der über den vorgenannten Angaben liegt, soweit die Gesamtmasse der eisenarmen Rohstoffe auf Basis Magnesia unterhalb der vorgenannten Anteile an Eisen liegt.

Gleiches gilt entsprechend für den Anteil an Calcium der eisenarmen Rohstoffe auf Basis Magnesia. Dabei kann Calcium, berechnet als CaO und bezogen auf die Gesamtmasse der eisenarme Rohstoffe, beispielsweise unter 5 Masse-% liegen, also beispielsweise auch unter 4, 3 oder 2 Masse-%.

Neben Eisen (Fe₂O₃) und CaO können die Rohstoffe auf Basis Magnesia beispielsweise noch Anteile an wenigstens einem der folgenden Bestandteile aufweisen: Al₂O₃ (bevorzugt unter 1 oder 0,5 Masse-%), SiO₂ (bevorzugt unter 5, 4, 3, 2, 1 Masse-%) oder B₂O₃ (bevorzugt unter 0,5 oder 0,4 Masse-%, 0,3 Masse-%, 0,2 Masse-% oder 0,1 Masse-%).

Bevorzugt liegt der Anteil an Magnesia (MgO) der eisenarmen Rohstoffe auf Basis Magnesia, wiederum bezogen auf die Gesamtmasse der eisenarmen Rohstoffe, über 90 Masse-%, also beispielsweise auch über 91, 92, 93, 94, 95, 96, 97 oder 98 Masse-%.

Die hierin gemachten Angaben in Masse-% beziehen sich, soweit im Einzelfall nicht anders angegeben, jeweils auf die Gesamtmasse des erfindungsgemäßen feuerfesten keramischen Versatzes.

Die eisenarmen Rohstoffe auf Basis Magnesia können beispielsweise in Form wenigstens eines der folgenden Rohstoffe vorliegen: Schmelzmagnesia oder Sintermagnesia.

Der Rohstoff auf Basis Magnesia oder die Rohstoffe auf Basis Magnesia können in einem Anteil im Bereich von 66 bis 94 Masse-% im Versatz vorliegen, also beispielsweise auch in einem Anteil von wenigstens 68, 70, 72, 73, 74, 75 oder 76 Masse-% und beispielsweise in einem Anteil von höchstens 93, 92, 91, 90, 89 oder 88 Masse-%.

Bevorzugt kann vorgesehen sein, dass die eisenarmen Rohstoffe auf Basis Magnesia eine Korngröße von maximal 10 mm aufweisen, insbesondere beispielsweise von maximal 9, 8, 7, 6 oder 5 mm.

Die Rohstoffe auf Basis Calciumcarbonat im erfindungsgemäßen Versatz können beispielsweise in Form wenigstens eines der folgenden Rohstoffe vorliegen: Kalkstein, Marmor oder Dolomit.

Bevorzugt kann vorgesehen sein, dass der Anteil an Calciumcarbonat der Rohstoffe auf Basis Calciumcarbonat, bezogen auf die Gesamtmasse der Rohstoffe auf Basis Calciumcarbonat, über 90 Masse-% liegt, also beispielsweise auch über 91, 92, 93, 94, 95, 96, 97, 98 oder 99 Masse-%. Beispielsweise kann vorgesehen sein, dass die Rohstoffe auf Basis Calciumcarbonat ausschließlich in Form von Kalkstein vorliegen.

Der Rohstoff auf Basis Calciumcarbonat oder die Rohstoffe auf Basis Calciumcarbonat können in einem Anteil im Bereich von 5 bis 30 Masse-% im Versatz vorliegen, also beispielsweise auch in einem Anteil von wenigstens 6, 7, 8 oder 9 Masse-% und beispielsweise in einem Anteil von höchstens 29, 28, 27, 26, 25, 24, 23, 22 oder 21 Masse-%.

Erfindungsgemäß hat sich herausgestellt, dass das zur Bildung von Dicalciumferrit benötigte Calciumoxid möglichst nur in einem geringen Anteil durch Dolomit zur Verfügung gestellt werden sollte. Denn über den Dolomit wird zusätzliche Magnesia in den Versatz eingetragen, indem das Magnesiumcarbonat des Dolomits bei der Anwendung des Versatzes zu Magnesia calciniert wird. Insoweit ist es zwar möglich, den Anteil an Rohstoffen auf Basis Magnesia des Versatzes gegebenenfalls zu reduzieren. Allerdings können die Eigenschaften einer aus dem Versatz hergestellten Masse verschlechtert werden, wenn es bei der Anwendung des Versatzes - neben einer Calcinierung der Rohstoffe auf Basis Calciumcarbonat - zu einer zusätzlichen Calcinierung der Rohstoffe des Versatzes kommt, indem zusätzlich Magnesiumcarbonat aus Dolomitrohstoffen calciniert. Insoweit hat es sich als vorteilhaft herausgestellt, wenn der Anteil an Dolomit im erfindungsgemäßen Versatz auf einen Anteil von maximal 15 Masse-% beschränkt wird.

Soweit die Rohstoffe auf Basis Calciumcarbonat daher teilweise auch in Form von Dolomit vorliegen, kann daher beispielsweise vorgesehen sein, dass diese nur in einem geringen Anteil neben Rohstoffen in Form von Kalkstein vorliegen. Beispielsweise kann vorgesehen sein, dass Dolomit nur in einem Anteil von höchstens 15 Masse-% im Versatz vorliegt, also beispielsweise auch in einem Anteil von höchstens 14, 12, 10, 8, 6, 4, 3, 2 oder 1 Masse-%.

Bevorzugt weisen die Rohstoffe auf Basis Calciumcarbonat eine Korngröße von maximal 8 mm auf, also beispielsweise auch von maximal 7, 6 oder 5 mm. Beispielsweise kann ferner vorgesehen sein, dass die Rohstoffe auf Basis Calciumcarbonat eine Korngröße von wenigstens 1 mm aufweisen, also beispielsweise auch von wenigstens 2 oder 3 mm. Die vorstehenden Angaben zur Korngröße der Rohstoffe auf Basis Calciumcarbonat können sich auf den gesamten Anteil dieser Rohstoffe beziehen oder beispielsweise auch auf einen Anteil von wenigstens 90 Masse-% der Rohstoffe, bezogen auf die Gesamtmasse der Rohstoffe auf Basis Calciumcarbonat.

Eisenpulver kann in dem Versatz in einem Anteil im Bereich von 1 bis 6 Masse-% vorliegen, also beispielsweise auch in einem Anteil von wenigstens 1,2 Masse-%, 1,4 Masse-%, 1,6 Masse-%, 1,8 oder 1,9 Masse-% und in einem Anteil von höchstens 5 Masse-%, 4 Masse-%, 3,8 Masse-%, 3,6 Masse-%, 3,4 Masse-%, 3,3 Masse-%, 3,2 Masse-% oder 3,1 Masse-%.

Für die Reaktion zwischen Eisen(III)-oxid und Calciumoxid zu Dicalciumferrit hat es sich als vorteilhaft herausgestellt, wenn das Eisen(III)-oxid in einer möglichst geringen Partikelgröße vorliegt. Dies kann erreicht werden, indem das Eisenpulver im erfindungsgemäßen Versatz in einer geringen Korngröße vorliegt, bevorzugt in einer Korngröße unter 0,5 mm, also beispielsweise auch in einer Korngröße unter 0,4 mm, 0,3 mm, 0,2 mm oder 0,1 mm. Diese Angaben zur Korngröße des Metallpulvers können sich auf die Gesamtmasse des Eisenpulvers beziehen oder beispielsweise auf einen Anteil von wenigstens 90 Masse-% des Eisenpulvers, bezogen auf die Gesamtmasse des Eisenpulvers.

Erfindungsgemäß hat sich herausgestellt, dass der Versatz sehr empfindlich auf weitere Komponenten reagieren kann. Beispielsweise können weitere Komponenten insbesondere die Bildung von Dicalciumferrit aus Eisenoxid und Calciumoxid verhindern oder unterdrücken. Dies gilt beispielsweise insbesondere für Kohlenstoff, da dieser mit dem Eisenpulver reagieren würde. Insbesondere kann daher erfindungsgemäß vorgesehen sein, dass der Anteil an Kohlenstoff in dem erfindungsgemäßen Versatz unter 1 Masse-% liegt.

Generell kann vorgesehen sein, dass der Anteil an Rohstoffen, die neben den erfindungsgemäß vorgesehenen Rohstoffen auf Basis Magnesia, den Rohstoffen auf Basis Calciumcarbonat sowie dem Eisenpulver in dem Versatz vorliegen, unter 10 Masse-% liegt, besonders bevorzugt unter 9, 8, 7, 6 oder 5 Masse-%.

Ferner kann vorgesehen sein, dass die Gesamtmasse der Oxide SiO₂ und Al₂O₃ im Versatz unter 5 Masse-% liegt, also beispielsweise auch unter 4, 3 oder 2 Masse-%. Die Oxide SiO₂ und Al₂O₃ können beispielsweise insbesondere durch Verunreinigungen der erfindungsgemäßen Rohstoffe in den Versatz eingetragen werden.

Gegenstand der Erfindung ist ferner die Verwendung des erfindungsgemäßen Versatzes zur Auskleidung von metallurgischen Schmelzgefäßen.

Diese Verwendung kann beispielsweise mit der Maßgabe erfolgen, dass der Versatz mit wenigstens einem Plastifizierer zu einem ungeformten feuerfesten keramischen Erzeugnis, also einer Masse, angemacht und das metallurgische Schmelzgefäß anschließend mit dem angemachten ungeformten feuerfesten keramischen Erzeugnis ausgekleidet wird. Insofern kann der erfindungsgemäße Versatz insbesondere als Herdbau- oder Herdreparaturmasse verwendet werden.

Der erfindungsgemäße Versatz kann jedoch beispielsweise auch ohne Plastifizierer unmittelbar als Masse verwendet werden.

Zur Herstellung eines ungeformten feuerfesten keramischen Erzeugnisses, also einer Masse, aus dem Versatz, können die Rohstoffe des Versatzes, neben deren etwaiger Ergänzung um einen Plastifizierer, gegebenenfalls innig miteinander vermischt werden.

Bei dem metallurgischen Schmelzgefäß, das durch den erfindungsgemäßen Versatz ausgekleidet werden kann, kann es sich grundsätzlich um jedes Gefäß zur Aufnahme einer Metallschmelze handeln, beispielsweise ein Gefäß, das zur Aufnahme einer Metallschmelze dient, beispielsweise einen Elektrolichtbogenofen, in dem eine Metallschmelze durch einen elektrischen Lichtbogen erzeugt wird.

Unter Auskleidung des metallurgischen Schmelzgefäßes wird hierin die zumindest teilweise Beschichtung eines metallurgischen Schmelzgefäßes in den Bereichen verstanden, die mit einer Metallschmelze in Kontakt treten würden, soweit diese nicht mit dem ungeformten feuerfesten keramischen Erzeugnis beschichtet beziehungsweise ausgekleidet wären.

Gegenstand der Erfindung ist ferner ein metallurgisches Schmelzgefäß, das mit einem ungeformten feuerfesten keramischen Erzeugnis ausgekleidet ist, wobei das ungeformte feuerfeste keramische Erzeugnis aus einem erfindungsgemäßen Versatz hergestellt ist.

Zur Herstellung eines ungeformten feuerfesten keramischen Erzeugnisses, also einer Masse, aus dem erfindungsgemäßen Versatz, kann diese bevorzugt mit einem Plastifizierer angemacht werden. Bei einem solchen Plastifizierer kann es sich beispielsweise um ein Öl handeln, beispielsweise ein Staubbindeöl, beispielsweise um wenigstens eines der folgenden Öle: naphtenbasisches Öl, Dieselöl oder Sonnenblumenöl. Plastifizierer kann dem Versatz beispielsweise in einem Anteil im Bereich von 0,1 bis 3 Masse-% zugegeben werden, bezogen auf die Gesamtmasse des Versatzes ohne den Plastifizierer.

Bevorzugt wird der erfindungsgemäße Versatz trocken als Masse verwendet, das heißt gegebenenfalls mit einem Plastifizierer, jedoch ohne Wasser.

Die Erfindung wird anhand der nachfolgenden Ausführungsbeispiele näher erläutert.

Gegenstand der Ausführungsbeispiele sind Versätze auf Basis eisenarmer Sintermagnesia, die aus einem eisen- und kalkarmen Magnesit gewonnen wurde.

Die in den Ausführungsbeispielen eingesetzte Sintermagnesia weist die folgende Zusammensetzung gemäß Tabelle 1 auf, wobei die Angaben in der rechten Spalten jeweils Angaben in Masse-% sind, bezogen auf den Anteil des jeweilige Oxids an der Gesamtmasse der Sintermagnesia.

**Tabelle 1**

| Oxid | Anteil |
|---|---|
| MgO | 94,4 |
| Fe₂O₃ | 0,6 |
| SiO₂ | 2,2 |
| Al₂O₃ | 0,1 |
| CaO | 2,7 |

In der nachfolgenden Tabelle 2 sind drei Versatzbeispiele A, B und C für erfindungsgemäße Versätze auf Basis der Sintermagnesia gemäß Tabelle 1 angegeben, wobei die Angaben in den Spalten der Versätze jeweils Angaben in Masse-% sind, bezogen auf den Anteil der jeweiligen Komponenten an der Gesamtmasse des jeweiligen Versatzes.

**Tabelle 2**

| Rohstoff | Körnung | Versatz A | Versatz B | Versatz C |
|---|---|---|---|---|
| Sintermagnesia | >5-8 mm | - | - | 15 |
| Sintermagnesia | >3-5 mm | 15 | 12 | 10 |
| Sintermagnesia | >1-3 mm | 17 | 13 | 11 |
| Sintermagnesia | >0,3-1 mm | 10 | 7 | 12 |
| Sintermagnesia | > 0,1-0,3 mm | 40 | 40 | 10 |
| Sintermagnesia | >0-0,1 mm | 5 | 5 | 20 |
| Kalkstein | 1-5 mm | 10 | 20 | 20 |
| Eisenpulver | >0-0,3 mm | 3 | 3 | 2 |

Die Versätze gemäß A und B werden als Herdreparaturmasse (Heißreparaturmasse) und der Versatz gemäß dem Ausführungsbeispiel C als Herbaumasse (Kaltzustellung) für die Zustellung eines metallurgischen Schmelzgefäßes verwendet.

Hierzu wurden die Versätze gemäß A und B jeweils zusätzlich mit Plastifizierer in einem Anteil von 0,5 Masse-% Sonnenblumenöl, bezogen auf die Gesamtmasse der jeweiligen Versätze ohne Sonnenblumenöl, zu einer Masse angemacht und anschließend das metallurgische Schmelzgefäß mit der derart angemachten Masse ausgekleidet.

Der Versatz gemäß dem Ausführungsbeispiel C wurde ohne Plastifizierer unmittelbar als Masse verwendet und das metallurgische Schmelzgefäß mit dem Versatz ausgekleidet.

Weitere Merkmale der Erfindung ergeben sich aus den Ansprüchen.

Sämtliche der zur Erfindung beschriebenen Merkmale können, einzeln oder in Kombination, beliebig miteinander kombiniert sein.

## Patentansprüche

1. Feuerfester keramischer Versatz zur Herstellung eines ungeformten feuerfesten keramischen Erzeugnisses, der die folgenden Rohstoffe umfasst:
1.1 einen oder mehrere eisenarme Rohstoffe auf Basis Magnesia mit einem Anteil im Bereich von 66 bis 94 Masse-%;
1.2 einen oder mehrere Rohstoffe auf Basis Calciumcarbonat mit einem Anteil im Bereich von 5 bis 30 Masse-%; und
1.3 Eisenpulver mit einem Anteil im Bereich von 1 bis 6 Masse-%.

2. Versatz nach Anspruch 1, bei dem der Anteil an Eisen der eisenarmen Rohstoffe auf Basis Magnesia, berechnet als Fe₂O₃ und bezogen auf die Gesamtmasse der eisenarmen Rohstoffe, unter 1,5 Masse-% liegt.

3. Versatz nach wenigstens einem der vorhergehenden Ansprüche, bei dem der Anteil an Calcium der eisenarmen Rohstoffe auf Basis Magnesia, berechnet als CaO und bezogen auf die Gesamtmasse der eisenarmen Rohstoffe, unter 5 Masse-% liegt.

4. Versatz nach wenigstens einem der vorhergehenden Ansprüche, bei dem der Anteil an Magnesia der eisenarmen Rohstoffe auf Basis Magnesia, bezogen auf die Gesamtmasse der eisenarmen Rohstoffe, über 90 Masse-% liegt.

5. Versatz nach wenigstens einem der vorhergehenden Ansprüche mit eisenarmen Rohstoffen auf Basis Magnesia in Form wenigstens eines der folgenden Rohstoffe: Schmelzmagnesia oder Sintermagnesia.

6. Versatz nach wenigstens einem der vorhergehenden Ansprüche, bei dem die eisenarmen Rohstoffe auf Basis Magnesia eine Korngröße von maximal 10 mm aufweisen.

7. Versatz nach wenigstens einem der vorhergehenden Ansprüche, bei dem der Anteil an Calciumcarbonat der Rohstoffe auf Basis Calciumcarbonat, bezogen auf die Gesamtmasse der Rohstoffe auf Basis Calciumcarbonat, über 90 Masse-% liegt.

8. Versatz nach wenigstens einem der vorhergehenden Ansprüche mit Rohstoffen auf Basis Calciumcarbonat in Form wenigstens eines der folgenden Rohstoffe: Kalkstein oder Dolomit.

9. Versatz nach wenigstens einem der vorhergehenden Ansprüche, bei dem die Rohstoffe auf Basis Calciumcarbonat eine Korngröße von maximal 8 mm aufweisen.

10. Versatz nach wenigstens einem der vorhergehenden Ansprüche, bei dem das Eisenpulver eine Korngröße von maximal 0,3 mm aufweist.

11. Verwendung eines Versatzes nach wenigstens einem der vorhergehenden Ansprüche zur Auskleidung von metallurgischen Schmelzgefäßen.

12. Verwendung nach Anspruch 11 mit der Maßgabe, dass der Versatz mit wenigstens einem Plastifizierer zu einem ungeformten feuerfesten keramischen Erzeugnis angemacht und das metallurgische Schmelzgefäß anschließend mit dem ungeformten feuerfesten keramischen Erzeugnis ausgekleidet wird.

13. Metallurgisches Schmelzgefäß, das mit einem ungeformten feuerfesten keramischen Erzeugnis ausgekleidet ist, wobei das ungeformte feuerfeste keramische Erzeugnis durch einen Versatz gemäß wenigstens einem der Ansprüche 1 bis 10 hergestellt ist.

## Claims

1. A refractory ceramic batch for the production of an unformed refractory ceramic product which comprises the following raw materials:
1.1 one or a plurality of magnesia-based raw materials low in iron with a fraction in the region of 66 to 94 % by mass;
1.2 one or a plurality of calcium carbonate-based raw materials with a fraction in the region of 5 to 30 % by mass; and
1.3 iron powder with a fraction in the region of 1 to 6 % by mass.

2. The batch according to claim 1, wherein the fraction of iron in the magnesia-based raw materials low in iron, calculated as Fe₂O₃ and relative to the total mass of the raw materials low in iron, is below 1.5 % by mass.

3. The batch according to at least one of the preceding claims, wherein the fraction of calcium in the magnesia-based raw materials low in iron, calculated as CaO and relative to the total mass of the raw materials low in iron, is below 5 % by mass.

4. The batch according to at least one of the preceding claims, wherein the fraction of magnesia in the magnesia-based raw materials low in iron, relative to the total mass of raw materials low in iron, is above 90 % by mass.

5. The batch according to at least one of the preceding claims with magnesia-based raw materials low in iron in the form of at least one of the following raw materials: molten magnesia or sintered magnesia.

6. The batch according to at least one of the preceding claims, wherein the magnesia-based raw materials low in iron have a grain size of maximum 10 mm.

7. The batch according to at least one of the preceding claims, wherein the fraction of calcium carbonate in the calcium carbonate-based materials, relative to the total mass of the calcium carbonate-based raw materials, is above 90 % by mass.

8. The batch according to at least one of the preceding claims with calcium carbonate-based raw materials in the form of at least one of the following raw materials: chalk or dolomite.

9. The batch according to at least one of the preceding claims, wherein the calcium carbonate-based raw materials have a grain size of maximum 8 mm.

10. The batch according to at least one of the preceding claims, wherein the iron powder has a grain size of maximum 0.3 mm.

11. Use of a batch according to at least one of the preceding claims for lining metallurgical melting vessels.

12. Use according to claim 11 with the proviso that the batch is prepared using at least one plasticizer into an unformed refractory ceramic product and the metallurgical melting vessel is then lined with the unformed refractory ceramic product.

13. A metallurgical melting vessel which is lined with an unformed refractory ceramic product, wherein the unformed refractory ceramic product is produced by a batch according to at least one of the claims 1 to 10.

## Revendications

1. Composition céramique réfractaire destinée à la fabrication d'un produit céramique réfractaire non façonné, qui comprend les matières premières suivantes :
1.1 une ou plusieurs matières premières pauvres en fer sur base de magnésie, dans une part de l'ordre de 66 à 94 % en masse,
1.2 une ou plusieurs matières premières sur base de carbonate de calcium, dans une part de l'ordre de 5 à 30 % en masse,
1.3 de la poudre de fer, dans une part de l'ordre de 1 à 6 % en masse.

2. Composition selon la revendication 1, dans laquelle, calculée en tant que Fe₂O₃ et rapportée à la masse totale des matières premières pauvres en fer, la part en fer des matières premières pauvres en fer sur base de magnésie est inférieure à 1,5 % en masse.

3. Composition selon au moins l'une quelconque des revendications précédentes, dans laquelle, calculée en tant que CaO et rapportée à la masse totale des matières premières pauvres en fer, la part en calcium des matières premières pauvres en fer sur base de magnésie est inférieure à 5 % en masse.

4. Composition selon au moins l'une quelconque des revendications précédentes, dans laquelle, rapportée à la masse totale des matières premières pauvres en fer, la part en magnésie des matières premières pauvres en fer sur base de magnésie est supérieure à 90 % en masse.

5. Composition selon au moins l'une quelconque des revendications précédentes, avec des matières premières pauvres en fer sur base de magnésie sous la forme d'au moins l'une des matières premières suivantes : magnésie fondue, magnésie frittée.

6. Composition selon au moins l'une quelconque des revendications précédentes, dans laquelle les matières premières pauvres en fer sur base de magnésie ont une grosseur de grains d'un maximum de 10 mm.

7. Composition selon au moins l'une quelconque des revendications précédentes, dans laquelle, rapportée à la masse totale des matières premières sur base ce carbonate de calcium, la part de carbonate de calcium des matières premières sur base de carbonate de calcium est supérieure à 90 % en masse.

8. Composition selon au moins l'une quelconque des revendications précédentes, avec des matières premières sur base de carbonate de calcium sous la forme d'au moins l'une des matières premières suivantes : calcaire ou dolomite.

9. Composition selon au moins l'une quelconque des revendications précédentes, dans laquelle les matières premières sur base de carbonate de calcium ont une grosseur de grains d'une maximum de 8 mm.

10. Composition selon au moins l'une quelconque des revendications précédentes, dans laquelle la poudre de fer a une grosseur de grains d'un maximum de 0,3 mm.

11. Utilisation d'une composition selon au moins l'une quelconque des revendications précédentes pour l'habillage de récipients de fusion métallurgiques.

12. Utilisation selon la revendication 11, avec la consigne qu'on gâche la composition avec au moins un plastifiant en un produit céramique réfractaire non façonné et en ce qu'on habille par la suite le récipient de fusion métallurgique avec le produit céramique réfractaire non façonné.

13. Récipient de fusion métallique qui est habillé d'un produit céramique réfractaire non façonné, le produit céramique réfractaire non façonné étant fabriqué avec une composition selon au moins l'une quelconque des revendications 1 à 10.
